# EUROPEAN PATENT SPECIFICATION

(11) **EP 4 372 279 B1**
(45) Date of publication and mention of the grant of the patent: **25.06.2025**
(21) Application number: 23204989.0
(22) Date of filing: 20.10.2023
(51) Int. Cl.: F23J 1/02, F23J 15/06

(54) **NESTED ASH DISCHARGE STRUCTURE AND ASH DISCHARGE METHOD IN HIGH-TEMPERATURE DEDUSTING APPARATUS**
VERSCHACHTELTE ASCHEAUSTRAGSSTRUKTUR UND ASCHEAUSTRAGSVERFAHREN IN EINER HOCHTEMPERATUR ENTSTAUBUNGSVORRICHTUNG
STRUCTURE DE DÉCHARGE DE CENDRES IMBRIQUÉES ET PROCÉDÉ DE DÉCHARGE DE CENDRES DANS UN APPAREIL DE DÉPOUSSIÉRAGE À HAUTE TEMPÉRATURE

(30) Priority: 16.11.2022 CN 202211433399
(43) Date of publication of application: 22.05.2024
(73) Proprietor: CERI Environment Protection Technology Co. Ltd., Beijing (CN); MCC Capital Engineering & Research Incorporation Limited, Beijing (CN)
(72) Inventor: Yang, Yuanman, Beijing (CN); Wang, Yuanxin, Beijing (CN); Wan, Qingming, Beijing (CN); Yang, Minghua, Beijing (CN); Xu, Changhong, Beijing (CN)
(74) Representative: Slingsby Partners LLP

(56) References cited:
- EP-A1- 3 388 745
- CN-U- 201 496 951
- US-A- 5 797 334
- US-A1- 2017 234 529

## Description

### TECHNICAL FIELD

The present disclosure relates to the technical field of flue de-dusting and waste heat recovery in converter steelmaking, and particularly to a nested ash discharge structure and an ash discharge method in a high-temperature dedusting apparatus.

### BACKGROUND

The flue gas generated during steelmaking by blowing oxygen into a converter has the characteristics of high temperature, large amount of the flue gas, high dust content and tiny dust particles. The purification and cooling of the flue gas is a necessary process in the gas recovery procedure. Since converter steelmaking is an intermittent periodic operation, both the amount and the temperature of the flue gas fluctuate periodically during the whole smelting cycle. For the ash hopper and the ash chute located in the flue gas, the temperature of their metal walls also changes periodically from eight or nine hundred degrees to tens of degrees.

In the prior art, there is an on-line cooling device for the dust and ash removal of a high-temperature dedusting apparatus, in which an ash hopper is disposed below a dust remover, a cooling pipeline is disposed in the ash hopper, and a cooling water inlet and a cooling water outlet of the cooling pipeline are both extended outside a housing of the ash hopper. In the device, the ash hopper outside the apparatus is provided with a cooling water pipe only for the purpose of cooling high-temperature ash and recovering hot water. The ash hopper needs to be supported separately. A related ash discharge structure is known from US 5 797 334 A.

Therefore, the inventor, based on many years' experiences and practices in related industries, proposes a nested ash discharge structure and an ash discharge method in a high-temperature dedusting apparatus to overcome the defects of the prior art.

### SUMMARY

The present invention aims to provide a nested ash discharge structure and an ash discharge method in a high-temperature dedusting apparatus. The present invention eliminates the need for separately providing a support structure for the nested ash hopper structure, effectively overcomes the high temperature in the apparatus, achieves a combination of the support and ash discharge, and has a simple whole structure, thereby providing favourable conditions for the safe operation of the apparatus.

The objective of the present invention is achieved by a nested ash discharge structure in a high-temperature dedusting apparatus, including:
a nested ash hopper structure, at least including an inner ash hopper and an outer ash hopper which are nested in the high-temperature dedusting apparatus, wherein an inner ash flow cavity penetrating the inner ash hopper in an axial direction is disposed in the inner ash hopper, and an annular space between the inner ash hopper and the outer ash hopper forms an outer ash flow cavity; and
a cooling frame structure, including inner cooling medium pipes and outer cooling medium pipes which are respectively disposed as a frame in the high-temperature dedusting apparatus, wherein the inner cooling medium pipes cool and support the inner ash hopper, the outer cooling medium pipes cool and support the outer ash hopper, and an overall flow direction of cooling medium in the inner cooling medium pipes and the outer cooling medium pipes is from bottom to top.

In an exemplary embodiment of the present invention, a sealing structure is disposed between the outer cooling medium pipes and the outer ash hopper.

In an exemplary embodiment of the present invention, an outer wall of each of the inner cooling medium pipes is provided with a first support block, through which the inner ash hopper is supported and erected.

In an exemplary embodiment of the present invention, the first support block is a circular or semicircular rib.

In an exemplary embodiment of the present invention, an outer wall of each of the outer cooling medium pipes is provided with a second support block, through which the outer ash hopper is supported and erected.

In an exemplary embodiment of the present invention, the second support block is a circular or semicircular rib.

In an exemplary embodiment of the present invention, the cooling medium in the inner cooling medium pipes and the outer cooling medium pipes is a gaseous cooling medium or a liquid cooling medium.

In an exemplary embodiment of the present invention, outer walls of the inner cooling medium pipes and outer cooling medium pipes are provided with anti-wear sheets.

In an exemplary embodiment of the present invention, the inner cooling medium pipes are symmetrically disposed with respect to the inner ash hopper, and the outer cooling medium pipes are symmetrically disposed with respect to the outer ash hopper.

In an exemplary embodiment of the present invention, outer walls of the inner cooling medium pipes and outer cooling medium pipes are provided with reinforcing ribs.

The objective of the present invention is further achieved by an ash discharge method in a high-temperature dedusting apparatus, including: disposing the nested ash discharge structure in the high-temperature dedusting apparatus described above below a multi-layer dedusting unit in the high-temperature dedusting apparatus; and continuously filling a cooling medium into the inner cooling medium pipes and the outer cooling medium pipes, the cooling medium flowing from bottom to top, wherein the inner cooling medium pipes cool and support the inner ash hopper, the outer cooling medium pipes cool and support the outer ash hopper, ash from an inner layer dedusting unit of a multi-layer dedusting unit flows into the inner ash flow cavity, ash from the outer layer dedusting unit of the multi-layer dedusting unit flows into the outer ash flow cavity, and then the ash flows downward to a bottom of the outer ash hopper.

From the above content, the nested ash discharge structure and the ash discharge method in the high-temperature dedusting apparatus according to the present invention have the following advantageous effects:

In the present invention, the cooling frame structure formed by the cooling medium pipes ensures the support strength for the nested ash hopper structure and increases the amount of waste heat recovery. Each ash hopper of the nested ash hopper structure corresponds to one layer of the dedusting structure, so as to ensure smooth falling of dust from each layer of dedusting structure, avoid cross-flow of gas among various layers of the multi-layer dedusting structure, and ensure the dedusting efficiency.

The present invention eliminates the need for separately providing a support structure for the nested ash hopper structure, effectively overcomes the high temperature in the apparatus, achieves a combination of the support and ash discharge, and has a simple whole structure, thereby providing favourable conditions for the safe operation of the apparatus.

### BRIEF DESCRIPTION OF THE DRAWINGS

The following drawing is only for the schematic illustration and explanation of the present invention, rather than limiting the scope of the present invention.

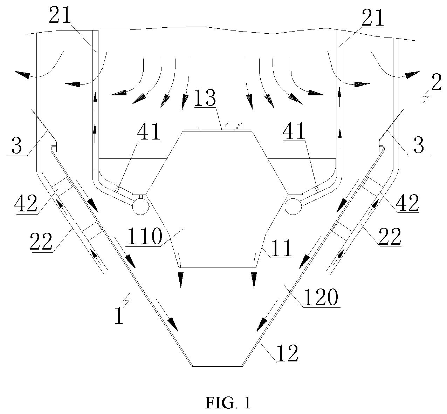

Fig. 1 is a schematic diagram of a nested ash discharge structure in a high-temperature dedusting apparatus of the present invention.

In the drawing:
1: nested ash hopper structure;
11: inner ash hopper; 110: inner ash flow cavity;
12: outer ash hopper; 120: outer ash flow cavity;
13: observation hole;
2: cooling frame structure;
21: inner cooling medium pipe; 22: outer cooling medium pipe;
3: sealing structure;
41: first support block; 42: second support block.

### DETAILED DESCRIPTION

For a clearer understanding of the objectives, technical features and effects of the present invention, specific embodiments will now be described with reference to the drawings.

The specific embodiments of the present invention described here are only for the purpose of explaining the present invention, and cannot be understood as limitations to the present invention in any way. Under the teaching of the present invention, one skilled can conceive any possible variation based on the present invention, which should be regarded as falling within the scope of the present invention. It should be noted that when an element is referred to as being 'disposed on' another element, it may be directly disposed on another element or may be through an intervening element. When an element is considered to be 'connected to' another element, it may be directly connected to another element or may be through an intervening element. The term 'mounted' and 'connected' should be understood in a broad sense, for example, each of them may be mechanically or electrically connected, or may be a communication between interiors of two elements, or may be directly connected or indirectly connected through an intermediate medium. For those of ordinary skill in the art, the specific meaning of the above term can be understood according to specific conditions. The terms 'vertical', 'horizontal', 'upper', 'lower', 'left' and 'right' and similar expressions used herein are only for the purpose of illustration, rather than indicating a unique embodiment.

Unless otherwise defined, all technical and scientific terms used herein have the same meanings as those commonly understood by those skilled in the art of this invention. The terms used in the specification of this invention are only for the purpose of describing the specific embodiments and are not intended to limit this invention. The term 'and/or' used in the present invention includes any and all combinations of one or more associated listed items.

As illustrated in Fig. 1, the present invention provides a nested ash discharge structure in a high-temperature dedusting apparatus, and the nested ash discharge structure includes a nested ash hopper structure 1 and a cooling frame structure 2.

The nested ash hopper structure 1 at least includes an inner ash hopper 11 and an outer ash hopper 12 which are nested in the high-temperature dedusting apparatus. An inner ash flow cavity 110 penetrating the inner ash hopper 11 in an axial direction is disposed in the inner ash hopper 11. An annular space between the inner ash hopper 11 and the outer ash hopper 12 forms an outer ash flow cavity 120. Ash from an outer layer dedusting structure flows to a bottom of the outer ash hopper 12 through the outer ash flow cavity 120 from top to bottom. Ash from an inner layer dedusting structure flows to the inner ash flow cavity 110 from top to bottom, and finally joins with the ash collected by the outer ash hopper and is discharged out of the dedusting apparatus. The nested ash hopper structure 1 may be a double-layer nested structure or a multi-layer nested structure.

The cooling frame structure 2 includes inner cooling medium pipes 21 and outer cooling medium pipes 22 which are respectively disposed as a frame in the high-temperature dedusting apparatus. The inner cooling medium pipes 21 cool and support the inner ash hopper 11, and the outer cooling medium pipes 22 cool and support the outer ash hopper 12. An overall flow direction of cooling medium in the inner cooling medium pipes 21 and the outer cooling medium pipes 22 is from bottom to top, thereby creating conditions for the natural circulation of the cooling medium. The cooling frame structure 2 through which the cooling medium flows can effectively reduce the deformation caused by high temperature and the influence of high temperature environment on the support (i.e., the cooling frame structure 2), thereby ensuring the support strength.

The inner ash hopper 11 is of a bowl-shaped structure as a whole, and may be provided with a fluidizing device (an outer ash receiving part and an inner ash receiving part) for the ash in a full consideration of the resistance balance of the flue gas, thereby not only receiving ash, but also effectively preventing 'short circuit' of the flue gas.

For the multi-layer dedusting structure (the prior art) of the high-temperature dedusting apparatus, in addition to considering the smooth falling of ash in each layer of the dedusting structure, the cross-flow of gas among various layers of the dedusting structure should be avoided to ensure the dedusting efficiency. The ash from the inner layer dedusting structure flows into the inner ash hopper 11 from top to bottom, the cooling medium in the inner cooling medium pipes 21 flows overall from bottom to top, and the cooling frame formed by the inner cooling medium pipes 21 ensures the support strength for the inner ash hopper 11 while increasing the amount of waste heat recovery. The ash from the outer dedusting structure flows into the outer ash hopper 12 from top to bottom, the cooling medium in the outer cooling medium pipes 22 flows overall from bottom to top, and the cooling frame formed by the outer cooling medium pipes 22 ensures the support strength for the outer ash hopper 12 while increasing the amount of waste heat recovery.

In the nested ash discharge structure in the high-temperature dedusting apparatus according to the present invention, the cooling frame structure formed by the cooling medium pipes ensures the support strength for the nested ash hopper structure and increases the amount of waste heat recovery. Each ash hopper of the nested ash hopper structure corresponds to one layer of the dedusting structure, so as to ensure smooth falling of the dust from each layer of the dedusting structure, avoid cross-flow of gas among various layers of the dedusting structures and ensure dedusting efficiency.

The nested ash discharge structure in the high-temperature dedusting apparatus according to the present invention eliminates the need for separately providing a support structure for the nested ash hopper structure, effectively overcomes the high temperature in the apparatus, achieves a combination of the support and the ash discharge, and has a simple whole structure, thereby providing favourable conditions for the safe operation of the apparatus.

Further, as illustrated in Fig. 1, a sealing structure 3 is disposed between the outer cooling medium pipes 22 and the outer ash hopper 12, so as to absorb different thermal expansions of the two structures (the outer cooling medium pipes and the outer ash hopper) after being heated, and prevent short circuit of the flue gas. In a specific embodiment of the present invention, the sealing structure 3 is a sealing plate.

Further, as illustrated in Fig. 1, an outer wall of each inner cooling medium pipe 21 is provided with a first support block 41, through which the inner ash hopper 11 is supported and erected.

In a specific embodiment of the present invention, the first support block 41 is a circular or semicircular rib, or in other shapes.

In consideration that the inner ash hopper 11 and the inner cooling medium pipes 21 have different thermal elongations, when being mounted in a cold state, the inner ash hopper 11 is welded with the first support block 41 (a rooting structure) of the inner cooling medium pipes 21, and is required to leave gaps with a lower header and a lower header support (the prior art) to absorb different thermal expansions.

Further, as illustrated in Fig. 1, an outer wall of each outer cooling medium pipe 22 is provided with a second support block 42, through which the outer ash hopper 12 is supported and erected.

In a specific embodiment of the present invention, the second support block 42 is a circular or semicircular rib.

The outer ash hopper 12 and the second support block 42 rooted on the outer cooling medium pipes 22 may be welded through only one welding point considering the thermal expansion, or may not be welded.

Further, the cooling medium in the inner cooling medium pipes 21 and the outer cooling medium pipes 22 is a gaseous cooling medium or a liquid cooling medium, or any other cooling medium.

Further, outer walls of the inner cooling medium pipes 21 and the outer cooling medium pipes 22 may be or may not be provided with anti-wear sheets, depending on the actual working conditions.

Further, the inner cooling medium pipes 21 are symmetrically disposed with respect to the inner ash hopper 11, and the outer cooling medium pipes 22 are symmetrically disposed with respect to the outer ash hopper 12. The total number of the cooling pipes (the inner cooling medium pipes 21 and the outer cooling medium pipes 22) may be odd or even.

Further, the outer walls of the inner cooling medium pipes 21 and the outer cooling medium pipes 22 are provided with reinforcing ribs.

Further, the inner cooling medium pipes 21 and the outer cooling medium pipes 22 may be provided with wear protectors in a windward direction.

Further, as illustrated in Fig. 1, the top of the inner ash hopper 11 is provided with an observation hole 13, through which internal situations of the inner ash hopper 11 can be observed during maintenance, and ash masses with a large volume can be cleaned during maintenance.

The present invention further provides an ash discharge method in a high-temperature dedusting apparatus, the method includes: disposing the nested ash discharge structure in the high-temperature dedusting apparatus described above below a multi-layer dedusting unit in the high-temperature dedusting apparatus; and continuously filling a cooling medium into the inner cooling medium pipes 21 and the outer cooling medium pipes 22, the cooling medium flowing from bottom to top. The inner cooling medium pipes 21 cool and support the inner ash hopper 11, and the outer cooling medium pipes 22 cool and support the outer ash hopper 12. Ash from an inner layer dedusting unit of a multi-layer dedusting unit flows into the inner ash flow cavity, ash from an outer layer dedusting unit of the multi-layer dedusting unit flows into the outer ash flow cavity, and then the ash flows downward to a bottom of the outer ash hopper.

From the above content, the nested ash discharge structure and the ash discharge method in the high-temperature dedusting apparatus according to the present invention have the following advantageous effects:

In the present invention, the cooling frame structure formed by the cooling medium pipes ensures the support strength for the nested ash hopper structure and increases the amount of waste heat recovery. Each ash hopper of the nested ash hopper structure corresponds to one layer of the dedusting structure, so as to ensure smooth falling of dust from each layer of dedusting structure, avoid cross-flow of gas among various layers of the multi-layer dedusting structure, and ensure the dedusting efficiency.

The present invention eliminates the need for separately providing a support structure for the nested ash hopper structure, effectively overcomes the high temperature in the apparatus, achieves a combination of the support and ash discharge, and has a simple whole structure, thereby providing favourable conditions for the safe operation of the apparatus.

Those described above are just illustrative embodiments of the present invention, rather than limitations thereto. Any equivalent change and modification made by persons skilled in the art without departing from the concept and principle of the present invention should fall within the protection scope of the appended claims.

## Claims

1. A nested ash discharge structure in a high-temperature dedusting apparatus, comprising:
a nested ash hopper structure (1), at least comprising an inner ash hopper (11) and an outer ash hopper (12) which are nested in the high-temperature dedusting apparatus, wherein an inner ash flow cavity (110) penetrating the inner ash hopper in an axial direction is disposed in the inner ash hopper, and an annular space between the inner ash hopper and the outer ash hopper forms an outer ash flow cavity; and
a cooling frame structure (2), comprising inner cooling medium pipes (21) and outer cooling medium pipes (22) which are respectively disposed as a frame in the high-temperature dedusting apparatus, wherein the inner cooling medium pipes cool and support the inner ash hopper, the outer cooling medium pipes cool and support the outer ash hopper, and an overall flow direction of cooling medium in the inner cooling medium pipes and the outer cooling medium pipes is from bottom to top.

2. The nested ash discharge structure in the high-temperature dedusting apparatus according to claim 1, wherein a sealing structure (3) is disposed between the outer cooling medium pipes and the outer ash hopper.

3. The nested ash discharge structure in the high-temperature dedusting apparatus according to claim 1, wherein an outer wall of each of the inner cooling medium pipes is provided with a first support block (41), through which the inner ash hopper is supported and erected.

4. The nested ash discharge structure in the high-temperature dedusting apparatus according to claim 3, wherein the first support block is a circular or semicircular rib.

5. The nested ash discharge structure in the high-temperature dedusting apparatus according to claim 1, wherein an outer wall of each of the outer cooling medium pipes is provided with a second support block (42), through which the outer ash hopper is supported and erected.

6. The nested ash discharge structure in the high-temperature dedusting apparatus according to claim 5, wherein the second support block is a circular or semicircular rib.

7. The nested ash discharge structure in the high-temperature dedusting apparatus according to claim 1, wherein the cooling medium in the inner cooling medium pipes and the outer cooling medium pipes is a gaseous cooling medium or a liquid cooling medium.

8. The nested ash discharge structure in the high-temperature dedusting apparatus according to claim 1, wherein outer walls of the inner cooling medium pipes and the outer cooling medium pipes are provided with anti-wear sheets.

9. The nested ash discharge structure in the high-temperature dedusting apparatus according to claim 1, wherein the inner cooling medium pipes are symmetrically disposed with respect to the inner ash hopper, and the outer cooling medium pipes are symmetrically disposed with respect to the outer ash hopper.

10. The nested ash discharge structure in the high-temperature dedusting apparatus according to claim 1, wherein outer walls of the inner cooling medium pipes and the outer cooling medium pipes are provided with reinforcing ribs.

11. An ash discharge method in a high-temperature dedusting apparatus, comprising:
disposing the nested ash discharge structure in the high-temperature dedusting apparatus according to any one of claims 1 to 10 below a multi-layer dedusting unit in the high-temperature dedusting apparatus; and
continuously filling a cooling medium into the inner cooling medium pipes (21) and the outer cooling medium pipes, the cooling medium flowing from bottom to top;
wherein the inner cooling medium pipes cool and support the inner ash hopper (11), the outer cooling medium pipes cool and support the outer ash hopper (12), ash from an inner layer dedusting unit of a multi-layer dedusting unit flows into the inner ash flow cavity (110), ash from the outer layer dedusting unit of the multi-layer dedusting unit flows into the outer ash flow cavity (120), and then the ash flows downward to a bottom of the outer ash hopper.

## Patentansprüche

1. Verschachtelte Ascheaustragsstruktur in einer Hochtemperatur-Entstaubungsvorrichtung, umfassend:
eine verschachtelte Aschetrichterstruktur (1), die zumindest einen inneren Aschetrichter (11) und einen äußeren Aschetrichter (12) umfasst, die in der Hochtemperatur-Entstaubungsvorrichtung verschachtelt sind, wobei ein innerer Aschestromhohlraum (110), der den inneren Aschetrichter in einer axialen Richtung durchdringt, in dem inneren Aschetrichter angeordnet ist und ein ringförmiger Raum zwischen dem inneren Aschetrichter und dem äußeren Aschetrichter einen äußeren Aschestromhohlraum bildet; und
eine Kühlrahmenstruktur (2), die innere Kühlmittelrohre (21) und äußere Kühlmittelrohre (22) umfasst, die jeweils als ein Rahmen in der Hochtemperatur-Entstaubungsvorrichtung angeordnet sind, wobei die inneren Kühlmittelrohre den inneren Aschetrichter kühlen und stützen, die äußeren Kühlmittelrohre den äußeren Aschetrichter kühlen und stützen und eine Gesamtströmungsrichtung des Kühlmittels in den inneren Kühlmittelrohren und den äußeren Kühlmittelrohren von unten nach oben verläuft.

2. Verschachtelte Ascheaustragsstruktur in der Hochtemperatur-Entstaubungsvorrichtung nach Anspruch 1, wobei eine Dichtungsstruktur (3) zwischen den äußeren Kühlmittelrohren und dem äußeren Aschetrichter angeordnet ist.

3. Verschachtelte Ascheaustragsstruktur in der Hochtemperatur-Entstaubungsvorrichtung nach Anspruch 1, wobei eine Außenwand jedes der inneren Kühlmittelrohre mit einem ersten Stützblock (41) versehen ist, durch den der innere Aschetrichter gestützt und aufgerichtet wird.

4. Verschachtelte Ascheaustragsstruktur in der Hochtemperatur-Entstaubungsvorrichtung nach Anspruch 3, wobei der erste Stützblock eine kreisförmige oder halbkreisförmige Strebe ist.

5. Verschachtelte Ascheaustragsstruktur in der Hochtemperatur-Entstaubungsvorrichtung nach Anspruch 1, wobei eine Außenwand jedes der äußeren Kühlmittelrohre mit einem zweiten Stützblock (42) versehen ist, durch den der äußere Aschetrichter gestützt und aufgerichtet wird.

6. Verschachtelte Ascheaustragsstruktur in der Hochtemperatur-Entstaubungsvorrichtung nach Anspruch 5, wobei der zweite Stützblock eine kreisförmige oder halbkreisförmige Strebe ist.

7. Verschachtelte Ascheaustragsstruktur in der Hochtemperatur-Entstaubungsvorrichtung nach Anspruch 1, wobei das Kühlmittel in den inneren Kühlmittelrohren und den äußeren Kühlmittelrohren ein gasförmiges Kühlmittel oder ein flüssiges Kühlmittel ist.

8. Verschachtelte Ascheaustragsstruktur in der Hochtemperatur-Entstaubungsvorrichtung nach Anspruch 1, wobei Außenwände der inneren Kühlmittelrohre und der äußeren Kühlmittelrohre mit Verschleißschutzblechen versehen sind.

9. Verschachtelte Ascheaustragsstruktur in der Hochtemperatur-Entstaubungsvorrichtung nach Anspruch 1, wobei die inneren Kühlmittelrohre symmetrisch in Bezug auf den inneren Aschetrichter angeordnet sind und die äußeren Kühlmittelrohre symmetrisch in Bezug auf den äußeren Aschetrichter angeordnet sind.

10. Verschachtelte Ascheaustragsstruktur in der Hochtemperatur-Entstaubungsvorrichtung nach Anspruch 1, wobei Außenwände der inneren Kühlmittelrohre und der äußeren Kühlmittelrohre mit Verstärkungsstreben versehen sind.

11. Ascheaustragsverfahren in einer Hochtemperatur-Entstaubungsvorrichtung, umfassend:
Anordnen der verschachtelten Ascheaustragsstruktur in der Hochtemperatur-Entstaubungsvorrichtung nach einem der Ansprüche 1 bis 10 unter einer Mehrschicht-Entstaubungseinheit in der Hochtemperatur-Entstaubungsvorrichtung; und
kontinuierliches Füllen eines Kühlmittels in die inneren Kühlmittelrohre (21) und die äußeren Kühlmittelrohre, wobei das Kühlmittel von unten nach oben strömt;
wobei die inneren Kühlmittelrohre den inneren Aschetrichter (11) kühlen und stützen, die äußeren Kühlmittelrohre den äußeren Aschetrichter (12) kühlen und stützen, Asche von einer Innenschicht-Entstaubungseinheit einer Mehrschicht-Entstaubungseinheit in den inneren Aschestromhohlraum (110) strömt, Asche von der Außenschicht-Entstaubungseinheit der Mehrschicht-Entstaubungseinheit in den äußeren Aschestromhohlraum (120) strömt und dann die Asche nach unten zu einem Boden des äußeren Aschetrichters strömt.

## Revendications

1. Structure de décharge de cendres imbriquée dans un appareil de dépoussiérage à haute température, comprenant :
une structure de trémies à cendres imbriquées (1), comprenant au moins une trémie à cendres interne (11) et une trémie à cendres externe (12) qui sont imbriquées dans l'appareil de dépoussiérage à haute température, une cavité d'écoulement de cendres interne (110) pénétrant dans la trémie à cendres interne suivant une direction axiale étant disposée dans la trémie à cendres interne, et un espace annulaire entre la trémie à cendres interne et la trémie à cendres externe formant une cavité d'écoulement de cendres externe ; et
une structure de cadre de refroidissement (2), comprenant des tuyaux de milieu de refroidissement internes (21) et des tuyaux de milieu de refroidissement externes (22) qui sont respectivement disposés comme un cadre dans l'appareil de dépoussiérage à haute température, lesdits tuyaux de milieu de refroidissement internes refroidissant et supportant la trémie à cendres interne, lesdits tuyaux de milieu de refroidissement externes refroidissant et supportant la trémie à cendres externe, et la direction d'écoulement globale du milieu de refroidissement dans les tuyaux de milieu de refroidissement internes et les tuyaux de milieu de refroidissement externes étant de bas en haut.

2. Structure de décharge de cendres imbriquée dans l'appareil de dépoussiérage à haute température selon la revendication 1, une structure d'étanchéité (3) étant disposée entre les tuyaux de milieu de refroidissement externes et la trémie de cendres externe.

3. Structure de décharge de cendres imbriquée dans l'appareil de dépoussiérage à haute température selon la revendication 1, une paroi externe de chacun des tuyaux de milieu de refroidissement internes étant pourvue d'un premier bloc support (41), à travers lequel la trémie à cendres interne est supportée et érigée.

4. Structure de décharge de cendres imbriquée dans l'appareil de dépoussiérage à haute température selon la revendication 3, ledit premier bloc support étant une nervure circulaire ou semi-circulaire.

5. Structure de décharge de cendres imbriquée dans l'appareil de dépoussiérage à haute température selon la revendication 1, une paroi externe de chacun des tuyaux de milieu de refroidissement externes étant pourvue d'un second bloc support (42), à travers lequel la trémie à cendres externe est supportée et érigée.

6. Structure de décharge de cendres imbriquée dans l'appareil de dépoussiérage à haute température selon la revendication 5, ledit second bloc support étant une nervure circulaire ou semi-circulaire.

7. Structure de décharge de cendres imbriquée dans l'appareil de dépoussiérage à haute température selon la revendication 1, ledit milieu de refroidissement dans les tuyaux de milieu de refroidissement internes et les tuyaux de milieu de refroidissement externes étant un milieu de refroidissement gazeux ou un milieu de refroidissement liquide.

8. Structure de décharge de cendres imbriquée dans l'appareil de dépoussiérage à haute température selon la revendication 1, lesdites parois externes des tuyaux de milieu de refroidissement internes et des tuyaux de milieu de refroidissement externes étant pourvues de feuilles anti-usure.

9. Structure de décharge de cendres imbriquée dans l'appareil de dépoussiérage à haute température selon la revendication 1, lesdits tuyaux de milieu de refroidissement internes étant disposés symétriquement par rapport à la trémie de cendres interne, et lesdits tuyaux de milieu de refroidissement externes étant disposés symétriquement par rapport à la trémie de cendres externe.

10. Structure de décharge de cendres imbriquée dans l'appareil de dépoussiérage à haute température selon la revendication 1, lesdites parois externes des tuyaux de milieu de refroidissement internes et des tuyaux de milieu de refroidissement externes étant pourvues de nervures de renforcement.

11. Procédé de décharge de cendres dans un appareil de dépoussiérage à haute température, comprenant :
la disposition de la structure de décharge de cendres imbriquée dans l'appareil de dépoussiérage à haute température selon l'une quelconque des revendications 1 à 10 en dessous d'une unité de dépoussiérage multicouche dans l'appareil de dépoussiérage à haute température ; et
le remplissage continu d'un milieu de refroidissement dans les tuyaux de milieu de refroidissement internes (21) et les tuyaux de milieu de refroidissement externes, le milieu de refroidissement s'écoulant de bas en haut ;
lesdits tuyaux de milieu de refroidissement internes refroidissant et supportant la trémie à cendres interne (11), lesdits tuyaux de milieu de refroidissement externes refroidissant et supportant la trémie à cendres externe (12), lesdites cendres provenant d'une unité de dépoussiérage de couche interne d'une unité de dépoussiérage multicouche s'écoulant dans la cavité d'écoulement de cendres interne (110), lesdites cendres provenant de l'unité de dépoussiérage de couche externe de l'unité de dépoussiérage multicouche s'écoulant dans la cavité d'écoulement de cendres externe (120), et ensuite lesdites cendres s'écoulant vers le bas vers un fond de la trémie à cendres externe.
